# EUROPEAN PATENT SPECIFICATION

(11) **EP 4 007 978 B1**
(45) Date of publication and mention of the grant of the patent: **09.07.2025**
(21) Application number: 20729693.0
(22) Date of filing: 28.05.2020
(51) Int. Cl.: G06N 3/094, G06N 3/096, G06N 3/09

(54) **A METHOD TO PREVENT CAPTURING OF MODELS IN AN ARTIFICIAL INTELLIGENCE BASED SYSTEM**
VERFAHREN ZUM VERMEIDEN VON MODELLEN IN EINEM SYSTEM BASIEREND AUF KÜNSTLICHER INTELLIGENZ
PROCÉDÉ PERMETTANT D'EMPÊCHER LA CAPTURE DE MODÈLES DANS UN SYSTÈME BASÉ SUR L'INTELLIGENCE ARTIFICIELLE

(30) Priority: 24.06.2019 IN 201941024967
(43) Date of publication of application: 08.06.2022
(73) Proprietor: Robert Bosch GmbH, 70442 Stuttgart (DE); Robert Bosch Engineering And Business Solutions Limited, Bangalore 560 095 State of Karnataka (IN)
(72) Inventor: HIMAJIT, Aithal, Bangalore 560083 (IN); POPAT, Param Vishweshwar, Jamnagar Gujarat 361008 (IN); PARMAR, Manojkumar Somabhai, Gujarat 38008 (IN)
(74) Representative: Bee, Joachim
(86) International application number: PCT/EP2020/064823
(87) International publication number: WO 2020/259943

(56) References cited:
- WO-A1-2019/014487
- WO-A1-2019/014487
- US-A1- 2020 134 391
- US-A1- 2020 134 391
- MIKA JUUTI ET AL: "PRADA: Protecting against DNN Model Stealing Attacks", ARXIV.ORG, CORNELL UNIVERSITY LIBRARY, 201 OLIN LIBRARY CORNELL UNIVERSITY ITHACA, NY 14853, 31 March 2019 (2019-03-31), XP081425461
- MANISH KESARWANI ET AL: "Model Extraction Warning in MLaaS Paradigm", 20181203; 1077952576 - 1077952576, 3 December 2018 (2018-12-03), pages 371 - 380, XP058421558, ISBN: 978-1-4503-6569-7, DOI: 10.1145/3274694.3274740
- DORJAN HITAJ ET AL: "Have You Stolen My Model? Evasion Attacks Against Deep Neural Network Watermarking Techniques", ARXIV.ORG, CORNELL UNIVERSITY LIBRARY, 201 OLIN LIBRARY CORNELL UNIVERSITY ITHACA, NY 14853, 3 September 2018 (2018-09-03), XP080913139
- DARVISH ROUANI BITA ET AL: "Safe Machine Learning and Defeating Adversarial Attacks", SECURITY & PRIVACY, IEEE, IEEE SERVICE CENTER, LOS ALAMITOS, CA, US, vol. 17, no. 2, 1 March 2019 (2019-03-01), pages 31 - 38, XP011717350, ISSN: 1540-7993, [retrieved on 20190329], DOI: 10.1109/MSEC.2018.2888779
- MIKA JUUTI ET AL: "PRADA: Protecting against DNN Model Stealing Attacks", ARXIV.ORG, CORNELL UNIVERSITY LIBRARY, 201 OLIN LIBRARY CORNELL UNIVERSITY ITHACA, NY 14853, 31 March 2019 (2019-03-31), XP081425461
- MANISH KESARWANI ET AL: "Model Extraction Warning in MLaaS Paradigm", 20181203; 1077952576 - 1077952576, 3 December 2018 (2018-12-03), pages 371 - 380, XP058421558, ISBN: 978-1-4503-6569-7, DOI: 10.1145/3274694.3274740
- DORJAN HITAJ ET AL: "Have You Stolen My Model? Evasion Attacks Against Deep Neural Network Watermarking Techniques", ARXIV.ORG, CORNELL UNIVERSITY LIBRARY, 201 OLIN LIBRARY CORNELL UNIVERSITY ITHACA, NY 14853, 3 September 2018 (2018-09-03), XP080913139

## Description

### Field of the invention

The present disclosure relates to processing of data and making decisions using artificial intelligence (AI). In particular the disclosure is related to prevent attacks on the AI based systems, where the attacks are aimed at stealing the models used in the AI which are deployed in target environment. Here stealing the models refers to trying to get/copy the functionality of the model through attack vectors using reverse engineering. The model here refers to any logic, algorithms, methods used in the processing of the data.

### Background of the invention

Now days, most of the data processing and decision making systems are implemented using artificial intelligence modules. The artificial intelligence modules use different techniques like machine learning, neural networks, deep learning etc.

Most of the AI based systems, receive large amount of data, process the data to train AI models. Train AI models generate output based on the use cases requested by the user. Typically the AI systems are used in the fields of computer vision, speech recognition, natural language processing, audio recognition, healthcare, autonomous driving, manufacturing, robotics etc. where they process data to generate required output based on certain rules/intelligence acquired through training.

To process the inputs, the AI systems use various models which are trained using the training data. Once the AI system is trained using the training data, the AI systems use the models to analyze the real time data and generate appropriate result. The models may be fine-tuned in real-time based on the results.

The models in the AI systems form the core of the system. Lot of effort, resources (tangible and intangible), and knowledge goes into developing these models.

It is possible that some adversary may try to capture/copy/extract the model from AI systems. The adversary may use different techniques to capture the model from the AI systems. One of the simple techniques used by the adversaries is where the adversary sends different queries to the AI system iteratively, using his own test data. The test data may be designed in a way to extract internal information about the working of the models in the AI system. The adversary uses the generated results to train his own models. By doing these steps iteratively, it is possible to capture the internals of the model and a parallel model can be built using the same logic. This will cause hardships to the original developer of the AI systems. The hardships may be in the form of business disadvantages, loss of confidential information, loss of lead time spent in development, loss of intellectual properties, loss of future revenues etc.

There are methods known in the prior arts to identify such attacks by the adversaries and to protect the models used in the AI system. The prior art US 2019 / 0095629 A1 discloses one such method.

The method disclosed in above prior art receives the inputs, the input data is processed by applying a trained model to the input data to generate an output vector having values for each of the plurality of pre-defined classes. A query engine modifies the output vector by inserting a query in a function associated with generating the output vector, to thereby generate a modified output vector. The modified output vector is then output. The query engine modifies one or more values to disguise the trained configuration of the trained model logic while maintaining accuracy of classification of the input data.

Non-patent Literature "Model Extraction Warning in MLaaS Paradigm" published by Annual Computer Security Applications Conference on December 3, 2018, provides a model extraction monitor that quantifies the extraction status of models by continually observing the API query and response streams of users.

### Brief description of the accompanying drawing

Different modes of the invention are disclosed in detail in the description and illustrated in the accompanying drawing:
FIG. 1 illustrates a block diagram of a AI based system capable of preventing stealing of a model implemented in the AI system.
Fig. 2 illustrates flow chart for a method to prevent stealing of a model implemented in the AI system.

### Detailed description of the embodiments

The present invention is set out by the appended independent claims. Preferred embodiments are set out by the dependent claims.

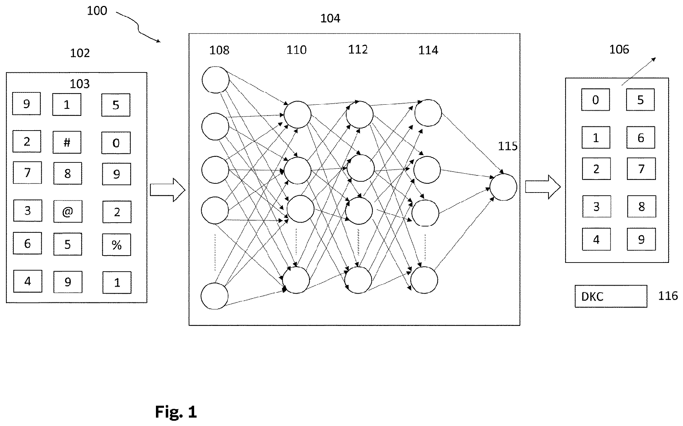

Shown in fig. 1 is a block diagram of an AI based system 100 capable of preventing stealing of a model 104 implemented in the AI system 100. The AI based system 100 is also referred just as System or as a data processing system in this document. The term stealing is also referred as capturing in this document.

Only the important components of the system 100 are disclosed in this document as all other components are commonly known. The system 100 has an input interface 102 to receive inputs, an AI module 104 to process the inputs, an output interface 106 to provide the outputs. The AI module 104 contains a model which processes the inputs using AI techniques and generates required output. The model is also referred as AI model. The model may be implemented as a set of software instructions, combination of software and hardware or any combination of the same. The input interface102 may be a keyboard, a touch screen, images, videos, suitable stimulus etc. It is also possible that the inputs may come over a bus or wirelessly or through any other communication. The output interface 106 may comprise a display or a bus. The output may be displayed on a display or sent through the bus which can be read by other devices. The model may be implemented using a neural network. Neural network is only an example here as there are other techniques available for implementing AI modules.

Neural networks are a set of algorithms, modeled after the human brain and cognition theory that are designed to recognize patterns.

Neural networks help us cluster and classify the data. They help to group unlabeled data according to similarities among the training (example) inputs, and they classify data when they have a labeled dataset to train on. Neural networks can also extract features that are fed to other algorithms for clustering and classification.

As shown in fig. 1, the AI model comprises a neural network. It is also possible that the AI model may be implemented using other techniques. The neural network shown in fig 1, typically has input layer 108, hidden layers 110, 112, 114 etc. and an output layer 115. In deep neural networks there may be multiple hidden layers. The data is processed in hidden layers. The output of one hidden layer is passed as input to next hidden layer for further processing. There may be different weightages assigned to the inputs.

The layers are made of nodes represented as circles. A node is just a place where computation happens, loosely patterned on a neuron in the human brain, which fires when it encounters sufficient stimuli. A node combines input from the data with a set of coefficients, or weights that either amplify or dampen that input, thereby assigning significance to inputs with regard to the task the algorithm is trying to learn; e.g. which input is most helpful in classifying data without error? These input-weight products are summed and then the sum is passed through a node's so-called activation function, to determine whether and to what extent that signal should progress further through the network to affect the ultimate outcome, say, an act of classification. If the signals passes through, the neuron has been "activated."

Shown in fig. 1 are samples of inputs shown as input 102. The system contains a set of classes represented as part of output 106.

Deep learning neural network maps inputs to outputs. It finds correlations/patterns between the inputs 102 and outputs 106. The neural networks can learn to approximate an unknown function f(x) = y between any sets of input x and any sets of output y, assuming they are related. In the process of learning, a neural network finds the right f, or the correct manner of transforming and mapping x into y.

And determining the function which correlates and/or finds the pattern to map the input to the output, forms the AI model which may be stolen by an adversary.

Some of the typical tasks performed by AI systems are classification, clustering, regression etc.

All classification tasks depend upon labeled datasets; that is, the data sets are labelled manually in order for a neural network to learn the correlation between labels and data. This is known as supervised learning. Some of the typical applications of classifications are: face recognition, object identification, gesture recognition, voice recognition etc.

Clustering or grouping is the detection of similarities in the inputs. Deep learning does not require labels to detect similarities. Learning without labels is called unsupervised learning. Unlabeled data is the majority of data in the world. One law of machine learning is: the more data an algorithm can train on, the more accurate it will be. Therefore, unsupervised learning has the potential to produce highly accurate models.

As the model forms the core of the AI system, the model needs to be protected against stealing by adversaries. The invention proposes a method to prevent any such attempts to steal the model.

A model stealing attack is a kind of attack vector that can make a digital twin/replica/copy of a pre-trained machine learning model. This attack was demonstrated in different research papers, where the model was captured/copied/extracted to build a substitute model with similar performance.

The attacker typically generates random queries of the size and shape of the input specifications and starts querying the model with these arbitrary queries. This querying produces input-output pairs for random queries and generates a secondary dataset that was inferred from the pre-trained model. The attacker then take this I/O pairs and trains the new model from scratch using this secondary dataset. This is blackbox model attack vector where no prior knowledge of original model is required. As the prior information level regarding model is available, attacker moves towards more intelligent attacks. The attacker chooses relevant dataset at his disposal to extract model more efficiently. This is domain intelligence model backed attack vector.

With these approaches, it is possible to demonstrate model stealing attack across different models and datasets. With regard to this attack, the invention discloses a method to prevent such attacks for stealing the models.

If Model is trained for N classes, then invention proposes to introduce a new class, therefore, making it an N+1 Classes. The new class is labeled as "Don't Know Class (DKC) 116". Thus the system generates output classes 107, 116. The DKC class is also referred as pre-defined class.

From the attack vectors, optimal attack vector and other sub-optimal attack vectors are identified. These attack vectors are random queries, as discussed in the previous part. All these attack vectors are labelled as DKC. During training, the DKC class is randomly sampled to ensure that DKC class is sufficiently represented to avoid class imbalance problem.

Now, the model is trained with N+1 classes where N classes 107 are pre-labeled, and new class DKC 116 is generated synthetically. The trained model now treats DKC class as default class. If the trained model is not able to associate any given input accurately to any of the classes to 107, then it puts the entry into DKC class 116 and returns the DKC class.

Thus the invention proposes that, in run time, if any user tries to run the attack vector, the system will refuse to classify this kind of data and therefore will provide protection, i.e. if the attacker tries to capture the model by iteratively sending inputs which cannot be classified, then the model returns it as a DKC 116. The system calculates the information gain achieved using DKC events and based on gain adaptive counter increment value a threshold is derived. One of the method is using simple thresholding and incrementing. A threshold may be set to store the number of times an input is returned as DKC 116. Every time DKC is detected, a counter is incremented. The incremental value of the counter depends upon the amount of information gained by the attacker through the DKC. The incremental value of the counter may change dynamically. The incremental value may be a simple increment of one step at a time, or the system 100 determines threshold for said counter based on at least one of the function usage, time and price. Here the system usage is referred to the amount of time used by the user. Price refers to the amount of money charged to the user. Function usage refers to the functions used by the user. Once the threshold is reached for the counter, the system 100 locks the user from accessing the AI system further. The system may be unlocked only after an unlocking criteria is met. The unlocking criteria may be a certain event, for example, a fixed duration of time, a fixed number of right inputs, a manual override etc. Manual override is where unlocking is done by providing manual inputs.

In the absence of a valid input-output pair, the attacker cannot exploit model stealing attack.

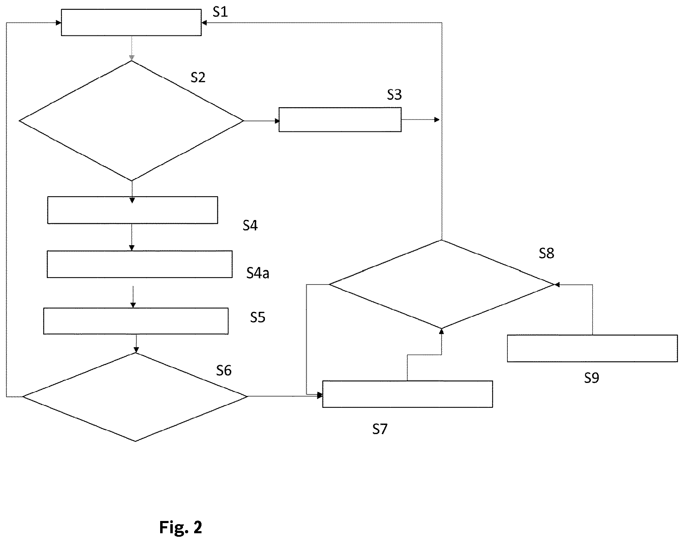

Fig. 2 shows a flow chart.

In step S1, the user input is received. In step S2 the input is classified against the classes in the data set for a match. If there is a match, in step S3, matching class is returned. If there is no match, a predefined class is returned in step S4. Based on DKC class detection, in step S4a, the system 100 calculates counter increment value based on predefined functions. In step S5, a counter is incremented based on values in S4a. In step S6, it is checked whether counter reached threshold. If the counter reaches the threshold, the system is locked in step S7. If the counter does not reach threshold, the control goes to step 1. In the event of system lock, the system 100 evaluates the unlocking criteria in step S8. The unlocking criteria is provided in step S9. If unlocking criteria is not met, system remains in lock down state in step S7. If unlocking criteria is met then system control goes to step 1.

The invention proposes a simple system which has capability to prevent any attack from an adversary to steal a module which is based on AI. The system comprises: an input interface 102; an output interface 106; a model 104 to process received inputs, said model 104 using artificial intelligence techniques; a set of data 107 where different classes are stored; said data processing system adapted to receive an input 103 from an user (S1); check whether said input 103 corresponds to at least one of classes 107 in a data set (S2); return a class 107 which corresponds to said input 103, from said data set, if said input 103 corresponds to at least one of said classes 107 in a data set (S3); return a pre-defined class 116 (Don't Know Class - DKC) from said data set if said input does not correspond to any of said classes in said data set (S4).

The invention proposes a method to prevent attack from an adversary to steal a model. The method comprises steps of: receiving an input 103 from an user; checking whether said input 103 corresponds to at least one of classes 107 in a data set; returning a class 107 which corresponds to said input 103, from said data set, if said input 103 corresponds to at least one of said classes 107 in a data set; returning a pre-defined class 116 (Don't Know Class - DNC) from said data set if said input does not correspond to any of said classes in said data set.

The system and method are simple and can be implemented as a function in the AI module, without needing any special hardware or software.

## Claims

1. A method to prevent capturing of models in an Artificial Intelligence based system, AI system, (100), wherein the AI based system (100) has an AI module (104) containing a model implemented as a set of software instructions, said method comprising the steps:
- receiving an input (103) from an user by means of an input interface of the AI system;
- checking whether said input (103) corresponds to at least one of classes (107) in a data set by means of the AI module (104);
- returning a class (107) which corresponds to said input (103), from said data set, if said input (103) corresponds to at least one of said classes (107) in said data set;
- returning a pre-defined synthetically generated class (116) Don't Know Class, DKC, which the model is trained to associate to random input queries, if said input (103) does not correspond to any of said classes in said data set;
- when said Don't Know Class, DKC, is returned:
o calculating information gain achieved using DKC events ;
o incrementing a gain adaptive counter to derive a threshold;
- locking the AI system (100) from an access of the user once said gain adaptive counter reaches said threshold to prevent capture of model in the AI system (100).

2. A method to prevent capturing of models in an Artificial Intelligence based system (100) according to claim 1, wherein during the training of the model, the predefined Don't Know Class- DKC (116) is randomly sampled to ensure that said class is sufficiently represented to avoid a class imbalance problem.

3. A method to prevent capturing of models in an Artificial Intelligence based system (100) according to claim 1, wherein an incremental value for said counter is calculated based on at least one of a function of linear and nonlinear and information gain modelling, when said Don't know class is returned.

4. A method to prevent capturing of models in an Artificial Intelligence based system (100) according to claim 1, wherein said AI system (100) determines a threshold for said counter based on at least one of the function usage and time and price.

5. A method to prevent capturing of models in an Artificial Intelligence based system (100) according to claim 1, wherein said AI system unlocks itself when an unlocking criteria is met.

6. A method to prevent capturing of models in an Artificial Intelligence based system (100) according to claim 5, wherein unlocking criteria is atleast one of a fixed duration of time, a fixed number of right inputs and a manual override.

7. An Artificial Intelligence based system (100) comprising:
- an input interface (102) to receive inputs (103);
- an output interface (106) to provide outputs (107;
- a AI module (104) containing a model implemented as a set of software instructions to process received inputs (103), said model using artificial intelligence techniques;
- a data set where different classes are stored;
said system adapted to
- receive an input (103) from an user via the user interface;
- check whether said input (103) corresponds to at least one of classes (107) in a data set;
- return a class (107) which corresponds to said input (103), from said data set, if said input (103) corresponds to at least one of said classes (107) in a data set;
- return a pre-defined synthetically generated class (116) Don't Know Class, DKC, which the model is trained to associate to random input queries, if said input (103) does not correspond to any of said classes in said data set;
- when said Don't Know Class, DKC, is returned:
∘ calculating information gain achieved using DKC events ;
∘ increment a gain adaptive counter to derive a threshold;
- lock the AI system from an access of the user once said gain adaptive counter reaches said threshold to prevent capture of model in the AI system.

8. The Artificial Intelligence based system (100) according to claim 7 wherein during the training of the model said DKC class (116) is randomly sampled to ensure that it is sufficiently represented to avoid a class imbalance problem.

## Patentansprüche

1. Verfahren zum Verhindern der Erfassung von Modellen in einem auf künstlicher Intelligenz basierenden System (KI-System) (100), wobei das KIbasierte System (100) ein KI-Modul (104) aufweist, das ein Modell enthält, das als ein Satz von Softwareanweisungen implementiert ist, wobei das Verfahren die folgenden Schritte umfasst:
- Empfangen einer Eingabe (103) von einem Benutzer mittels einer Eingabeschnittstelle des KI-Systems;
- Prüfen, ob die Eingabe (103) mindestens einer der Klassen (107) in einem Datensatz entspricht, mittels des KI-Moduls (104);
- Zurückgeben einer Klasse (107), die der Eingabe (103) entspricht, aus dem Datensatz, wenn die Eingabe (103) mindestens einer der Klassen (107) in dem Datensatz entspricht;
- Zurückgeben einer vordefinierten synthetisch erzeugten Don't Know Class (DKC) (116), wobei das Modell trainiert ist, um sie zufälligen Eingabeabfragen zuzuordnen, falls die Eingabe (103) keiner der Klassen in dem Datensatz entspricht;
- wenn die Don't Know Class (DKC) zurückgegeben wird:
∘ Berechnen der Informationsverstärkung, die unter Verwendung von DKC-Ereignissen erreicht wird;
∘ Inkrementieren eines verstärkungsadaptiven Zählers, um eine Schwelle abzuleiten;
- Sperren des KI-Systems (100) vor einem Zugriff des Benutzers, sobald der verstärkungsadaptive Zähler den Schwellenwert erreicht hat, um eine Erfassung des Modells in dem KI-System zu verhindern (100).

2. Verfahren zum Verhindern der Erfassung von Modellen in einem auf künstlicher Intelligenz basierenden System (100) nach Anspruch 1, wobei während des Trainings des Modells die vordefinierte Don't Know Class (DKC) (116) zufällig abgetastet wird, um sicherzustellen, dass die Klasse ausreichend repräsentiert ist, um ein Klassenungleichgewichtsproblem zu vermeiden.

3. Verfahren zum Verhindern der Erfassung von Modellen in einem auf künstlicher Intelligenz (100) basierenden System nach Anspruch 1, wobei ein inkrementeller Wert für den Zähler basierend auf einer Funktion von linearer und/oder nichtlinearer und/oder Informationsverstärkungsmodellierung berechnet wird, wenn die Don't Know Class zurückgegeben wird.

4. Verfahren zum Verhindern der Erfassung von Modellen in einem auf künstlicher Intelligenz basierenden System (100) nach Anspruch 1, wobei das KI-System (100) eine Schwelle für den Zähler basierend auf der Funktionsnutzung und/oder der Zeit und/oder dem Preis bestimmt.

5. Verfahren zum Verhindern der Erfassung von Modellen in einem auf künstlicher Intelligenz basierenden System (100) nach Anspruch 1, wobei sich das KI-System entriegelt, wenn ein Entsperrungskriterium erfüllt ist.

6. Verfahren zum Verhindern der Erfassung von Modellen in einem auf künstlicher Intelligenz basierenden System (100) nach Anspruch 5, wobei das Entriegelungskriterium mindestens eines von einer festen Zeitdauer, einer festen Anzahl von richtigen Eingaben und einer manuellen Übersteuerung ist.

7. Auf künstlicher Intelligenz basierendes System (100), das Folgendes umfasst:
- eine Eingabeschnittstelle (102) zum Empfangen von Eingaben (103);
- eine Ausgabeschnittstelle (106) zum Bereitstellen von Ausgaben (107);
- ein KI-Modul (104), das ein Modell enthält, das als ein Satz von Softwareanweisungen implementiert ist, um empfangene Eingaben zu verarbeiten (103), wobei das Modell Techniken der künstlichen Intelligenz verwendet;
- einen Datensatz, in dem verschiedene Klassen gespeichert sind;
wobei das System für Folgendes ausgelegt ist:
- Empfangen einer Eingabe (103) von einem Benutzer über die Benutzerschnittstelle;
- Prüfen, ob die Eingabe (103) mindestens einer der Klassen (107) in einem Datensatz entspricht;
- Zurückgeben einer Klasse (107), die der Eingabe (103) entspricht, aus dem Datensatz, wenn die Eingabe (103) mindestens einer der Klassen (107) in einem Datensatz entspricht;
- Zurückgeben einer vordefinierten synthetisch erzeugten Don't Know Class (DKC) (116), wobei das Modell trainiert ist, um sie zufälligen Eingabeabfragen zuzuordnen, wenn die Eingabe (103) keiner der Klassen in dem Datensatz entspricht;
- wenn die Don't Know Class (DKC) zurückgegeben wird:
∘ Berechnen der Informationsverstärkung, die unter Verwendung von DKC-Ereignissen erreicht wird;
∘ Inkrementieren eines verstärkungsadaptiven Zählers, um eine Schwelle abzuleiten;
- Sperren des KI-Systems vor einem Zugriff des Benutzers, sobald der verstärkungsadaptive Zähler den Schwellenwert erreicht hat, um eine Erfassung des Modells im KI-System zu verhindern.

8. Auf künstlicher Intelligenz basierendes System (100) nach Anspruch 7, wobei während des Trainings des Modells die DKC-Klasse (116) zufällig abgetastet wird, um sicherzustellen, dass sie ausreichend repräsentiert ist, um ein Klassenungleichgewichtsproblem zu vermeiden.

## Revendications

1. Procédé pour empêcher la capture de modèles dans un système basé sur l'intelligence artificielle, système IA (100), dans lequel le système basé sur l'IA (100) comporte un module IA (104) contenant un modèle mis en œuvre sous la forme d'un ensemble d'instructions logicielles, ledit procédé comprenant les étapes suivantes :
- recevoir une entrée (103) provenant d'un utilisateur au moyen d'une interface d'entrée du système IA ;
- vérifier si ladite entrée (103) correspond à au moins une des classes (107) dans un ensemble de données au moyen du module IA (104) ;
- renvoyer une classe (107) qui correspond à ladite entrée (103), à partir dudit ensemble de données, si ladite entrée (103) correspond à au moins une desdites classes (107) dans ledit ensemble de données ;
- renvoyer une classe prédéfinie générée synthétiquement (116) « Classe inconnue », DKC, pour laquelle le modèle est formé pour l'associer à des requêtes d'entrée aléatoires, si ladite entrée (103) ne correspond à aucune desdites classes dans ledit ensemble de données ;
- lorsque ladite classe « Classe inconnue », DKC, est renvoyée :
∘ calculer le gain d'information obtenu à l'aide des événements DKC ;
∘ incrémenter un compteur adaptatif de gain afin de dériver un seuil ;
- verrouiller le système IA (100) afin d'empêcher tout accès de l'utilisateur une fois que ledit compteur adaptatif de gain atteint ledit seuil afin d'empêcher la capture du modèle dans le système IA (100).

2. Procédé pour empêcher la capture de modèles dans un système basé sur l'intelligence artificielle (100) selon la revendication 1, dans lequel, pendant l'entraînement du modèle, la classe prédéfinie « Classe inconnue », DKC, (116) est échantillonnée de manière aléatoire pour garantir que ladite classe est suffisamment représentée afin d'éviter un problème de déséquilibre des classes.

3. Procédé pour empêcher la capture de modèles dans un système basé sur l'intelligence artificielle (100) selon la revendication 1, dans lequel une valeur incrémentielle pour ledit compteur est calculée sur la base d'au moins une fonction de modélisation linéaire et non linéaire et de gain d'information, lorsque ladite classe « Classe inconnue » est renvoyée.

4. Procédé pour empêcher la capture de modèles dans un système basé sur l'intelligence artificielle (100) selon la revendication 1, dans lequel ledit système IA (100) détermine un seuil pour ledit compteur sur la base d'au moins l'un parmi l'utilisation de la fonction, le temps et le prix.

5. Procédé pour empêcher la capture de modèles dans un système basé sur l'intelligence artificielle (100) selon la revendication 1, dans lequel ledit système IA se déverrouille lorsqu'un critère de déverrouillage est satisfait.

6. Procédé pour empêcher la capture de modèles dans un système basé sur l'intelligence artificielle (100) selon la revendication 5, dans lequel le critère de déverrouillage est au moins l'un d'une durée fixe, d'un nombre fixe d'entrées correctes et d'une dérogation manuelle.

7. Système basé sur l'intelligence artificielle (100) comprenant :
- une interface d'entrée (102) pour recevoir des entrées (103) ;
- une interface de sortie (106) pour fournir des sorties (107) ;
- un module IA (104) contenant un modèle mis en œuvre sous la forme d'un ensemble d'instructions logicielles pour traiter les entrées reçues (103), ledit modèle utilisant des techniques d'intelligence artificielle ;
- un ensemble de données dans lequel différentes classes sont stockées ;
ledit système étant adapté pour
- recevoir une entrée (103) d'un utilisateur par l'intermédiaire de l'interface utilisateur ;
- vérifier si ladite entrée (103) correspond à au moins une des classes (107) dans un ensemble de données ;
- renvoyer une classe (107) qui correspond à ladite entrée (103), à partir dudit ensemble de données, si ladite entrée (103) correspond à au moins une desdites classes (107) dans un ensemble de données ;
- renvoyer une classe prédéfinie générée synthétiquement (116) « Classe inconnue », DKC, pour laquelle le modèle est formé pour l'associer à des requêtes d'entrée aléatoires, si ladite entrée (103) ne correspond à aucune desdites classes dans ledit ensemble de données ;
- lorsque ladite classe « Classe inconnue », DKC, est renvoyée :
∘ calculer le gain d'information obtenu à l'aide des événements DKC ;
∘ incrémenter un compteur adaptatif de gain afin de dériver un seuil ;
- verrouiller le système IA afin d'empêcher tout accès de l'utilisateur une fois que ledit compteur adaptatif de gain atteint ledit seuil afin d'empêcher la capture du modèle dans le système IA.

8. Système basé sur l'intelligence artificielle (100) selon la revendication 7, dans lequel, pendant l'entraînement du modèle, ladite classe DKC (116) est échantillonnée de manière aléatoire afin de garantir qu'elle est suffisamment représentée pour éviter un problème de déséquilibre des classes.
